# EUROPEAN PATENT SPECIFICATION

(11) **EP 4 050 412 B1**
(45) Date of publication and mention of the grant of the patent: **16.04.2025**
(21) Application number: 22154143.6
(22) Date of filing: 31.01.2022
(51) Int. Cl.: G03B 15/00, G03B 15/02, G03B 15/03

(54) **OPTICAL DEVICE FOR USE IN MACROPHOTOGRAPHY AND STEREOMICROSCOPY**
OPTISCHE VORRICHTUNG ZUR VERWENDUNG IN MACRO- UND STEREOFOTOGRAFIE
DISPOSITIF OPTIQUE A UTILISER EN MACRO ET STEREO PHOTOGRAPHIE

(30) Priority: 25.02.2021 IT 202100004367
(43) Date of publication of application: 31.08.2022
(73) Proprietor: Microconsult Srl, 50019 Sesto Fiorentino (FI) (IT)
(72) Inventor: VALLERIANI, Marco, 50019 Sesto Fiorentino (FI) (IT)
(74) Representative: Leotta, Antonio

(56) References cited:
- JP-A- 2006 337 422
- US-A- 5 756 981
- US-A1- 2008 137 324
- US-B2- 10 405 752

## Description

### TECHNICAL SECTOR

The present invention relates to the field of photography ranging from macrophotography to stereomicroscopy.

The invention relates in particular to an optical device for use in macrophotography or stereomicroscopy having a peculiar light scattering system.

### PRIOR ART

Three-dimensional analysis of the topography of objects of various kinds, such as metals and metal alloys, remnants of munitions, minerals, etc., is normally entrusted to instruments such as stereo-microscopes.

Essentially, these instruments differ from traditional biological microscopes in that the analysis is performed not by transmission but by reflection, thus making it possible to acquire three-dimensional images containing a precise perception of depth. This is made possible by the fact that the object is observed through two spatially separated optical paths, in other words the stereomicroscope observes the object from two distinct viewing angles.

In general, the stereomicroscope is basically composed of a mechanical part, the stand, comprising a base, a focusing knob and a magnification adjustment knob, the special optical system consisting of two observation channels and a lighting apparatus.

Unlike biological microscopes, equipped with optics capable of achieving extremely high levels of magnification, stereo microscopes provide magnification ranging from 10x to 90x, up to 180x for the most sophisticated instruments.

In the analysis of minerals or, in general, of objects with portions of reflective surface, and in the quality control of metals and their alloys, the main disadvantage in using stereomicroscopes is the reflection of the incident light by the material which, by altering the light's trajectory, leads to the loss of information relating to the surface characteristics of the object, thereby negatively affecting the entire analysis.

Visualisation of the details of extremely small objects can also be achieved by means of macrophotography. The term macrophotography defines a type of image acquisition in which the subject is reproduced at a natural magnification, i.e. at a reproduction ratio of 1:1, or greater, usually up to a ratio of 5:1. In the domain of extreme macrophotography, also referred to as extreme close-up photography, magnification of the obtainable subject is greater, namely up to 10 times that subject's natural size.

In the industry, metallographic and mineralogical analyses are often conducted using macrophotographic instruments. The primary advantage of using this type of instrumentation is that good quality images can be obtained by means of mostly compact and low-cost devices. In fact, rapid technological evolution in the sector has made macro photography feasible even using instruments that are not necessarily of professional standard. It is, indeed, possible to adapt many types of digital cameras, readily available on the market at relatively low cost, to the macro technique. This is with the help of spacer cables, veritable extensions placed between the lens and camera body which, by moving the lens away from the sensor, increase the magnification ratio. Alternatively, dedicated lenses, known as macro lenses, can be used, optically corrected to exhibit a less pronounced aberration of the focal profile compared to standard lenses.

Conversely, the maximum magnification of the subject achievable with this type of technique is normally five times the natural size of said subject. In addition, despite the considerable advantages of using a wide range of relatively simplified configuration equipment, the main limitation of macrophotography lies in the intrinsic loss of brightness. By definition, indeed, this technique requires a restricted field of view, and the amount of light reaching the sensor is thereby usually quite small. The subject to be analysed must hence be in a condition of sufficient exposure to natural light or, in cases where this condition is not obtainable, it is necessary to resort to a suitable external light source, such as a flash, making the acquisition and subsequent processing of the image more laborious.

Clearly, in metallographic and mineralogical analyses, such limitations can further complicate the quality and accuracy of the representation, to the point of compromising the entire analysis.

To overcome the problems of exposure of the subject and loss of brightness, both stereomicroscopy and macrophotography often resort to auxiliary devices to increase exposure levels, minimise the disturbance of ambient light and reduce shadow areas. In this context, a frequently used accessory is represented by LED ring light systems, which are normally screwed to the lens, which increase the quantity of light reflected by the specimen.

Once again, however, such a solution, although optimal for opaque subjects, does not solve the problems highlighted above with regard to subjects with a reflective surface.

JP 2006 337422 A discloses a camera for macro photography with a ring light at the very end of the imaging optics.

### SUMMARY OF THE INVENTION

To solve the problems associated with the prior art, the main purpose of the present invention is to provide an optical device for the acquisition of images with a magnification ratio suitable for performing metallographic, mineralogical and ballistic analysis etc., said device being equipped with a front lighting system configured in such a way as not to generate problems with the quality of the acquired image due to light reflection phenomena.

A further aim of the present invention is to propose an optical device for metallographic and mineralogical analysis etc., one that offers an immediacy and simplicity of setting such as to make its use possible even for non-specialist personnel.

Yet another aim of the present invention is to propose a high-performing optical device which is both portable and inexpensive at the same time.

The purposes listed above are obtained by means of an optical device for use in macrophotography and stereomicroscopy, comprising a zoom optical assembly with a fixed section and a zoom section that moves in the direction of the optical axis with respect to the fixed section, and a lighting system provided with a ring light that can be permanently associated with the end of said zoom section, which device is characterised in that it comprises a first diffuser that is integral with said mobile section arranged below said ring light so as to be interposed between the light source and the subject to be photographed, and a second diffuser that is integral with said fixed section substantially, is bell-shaped and is arranged in such a way that said ring light and first diffuser are housed inside the relevant cavity.

Thus, by virtue of the diffuser system with which it is equipped, the device according to the invention guarantees uniform and diffused lighting of the subject, without the generation of shadow zones or preferential trajectories induced by reflection phenomena, so as to represent an optimal solution for carrying out analyses and examinations of subjects not uniformly opaque and with reflective portions, as for example occurs in the quality control of metals and their alloys.

The main characteristic of the device according to the present invention is therefore identified in its ability to prevent the light emitted by the lighting assembly from directly reaching the specimen to be visualised in such a way as to generate a section of diffused light of appropriate shape and intensity.

Advantageously, the lighting system of the device according to the invention makes use of a ring light comprising LED modules and which offers long-lasting performance and substantial energy savings.

Further features and advantages are listed in the dependent claims.

### BRIEF DESCRIPTION OF THE DRAWINGS

In order to facilitate a better understanding of other features and advantages of the invention, a description of an embodiment of the invention is set out below, provided by way of example only, with the aid of the accompanying drawings, wherein:
- FIG. 1 provides a sectional view of an optical device according to the invention;
- FIG. 2 shows a schematic side view of an optical instrument comprising the optical device of FIG. 1;
- FIG. 3 shows a top view of the optical instrument of FIG. 2.

### DETAILED DESCRIPTION OF PREFERRED EMBODIMENTS

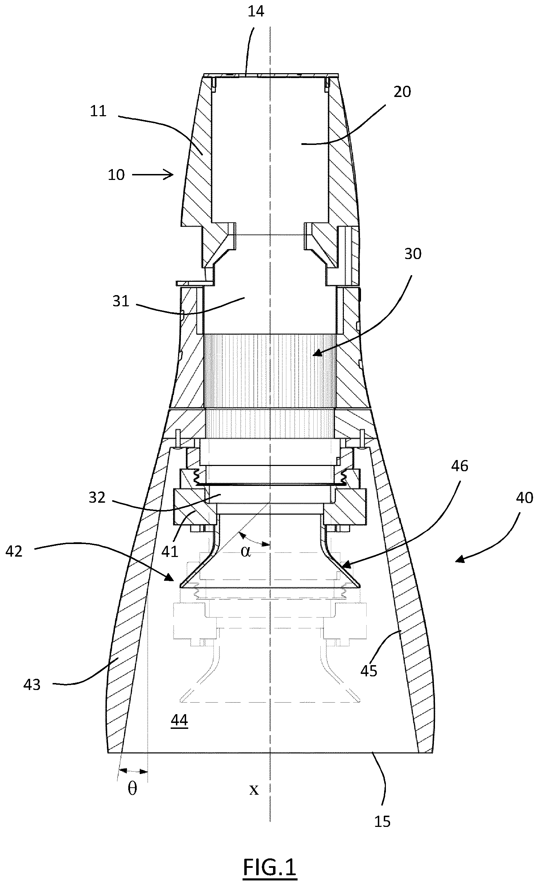

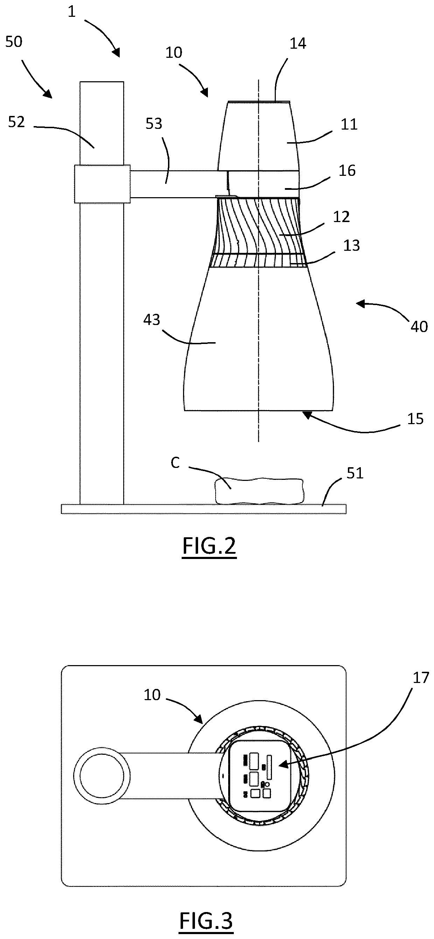

With reference to FIGS. 1-2, an optical instrument according to the invention is indicated with 1, summarily comprising a base structure 50 and an optical device 10.

The base structure 50, substantially known in the art, consists of a base 51 for supporting a sample C to be visualised and from which a column 52 extends vertically to which a connecting arm 53 is linked to the device 10. The connecting arm 53 may be moved vertically along said column 52 so as to adjust the height of the optical device 10.

The optical device 10 has an overall elongated shape with an upper portion of substantially cylindrical shape and a lower portion of substantially conical shape which extends downward with a base surface 15 of greater diameter than that of the upper base surface 14 of the device itself. It schematically comprises a tubular container body 11 adapted for connection to the connecting arm 53 via a restriction section 16 and to house a camera body 20 therein. An optical zoom assembly 30 is associated at one end with the camera body 20 while a lighting system 40 can be found at the other end. Along the optical device 10, in addition to the elongated container body 11 and the restriction section 16, an adjustment ring for the zoom 12 and an adjustment ring for the focus 13 suitable for acting on the external surface of the optical group 30 to adjust the magnification and focus, respectively, are also identified externally, as usually happens in the lenses of reflex cameras.

In accordance with the prior art, the machine body 20 comprises an image sensor (not shown, since it is already known in the art) and a control unit comprising interfaces 17 for housing data storage media, external power or data transmission connections and other devices for direct input of commands.

In detail, the zoom optical assembly 30 consists of a fixed section 31 housing one or more lenses of predefined construction characteristics, and a section 32 that can move in the direction of the optical axis X which also houses one or more lenses.

A lighting system 40 is located at the lower end of the optical device 10, namely in the area of the movable section 32. This lighting system 40 provides for the generation of a diffused and uniform light section and includes an assembly of diffusers of suitable geometry and orientation, as well as a ring light 41 appropriately positioned.

In detail, a first diffuser, 42, of substantially conical shape, is permanently associated with the lower end of the movable section 32. In addition, the aforementioned ring light 41 is constrained to said lower end of the movable section and therefore surmounts said first diffuser 42.

Specifically, said first diffuser 42 comprises a diffusive outer conical surface 46 with an axis coinciding with the optical axis X and a cross section increasing in the direction of moving away from a portion connecting to the movable section 32 so as to form an angle α with the optical axis X of less than 90°. The embodiment discussed herein also provides that said first diffuser 42 is associated with the end of the movable section 32 through attachment means, which can be of any known type, for example threaded or interlocking elements. In this way, said first diffuser 42 is removable and therefore potentially replaceable with a similar diffuser of different shape or materials.

In addition, the outer surface 46 of said first diffuser 42 has a minimum diameter equal to or less than the inner diameter of the aforementioned ring light 41 and a maximum diameter equal to or greater than the outer diameter of the ring light itself. In accordance with the present embodiment, the ring light 41 consists of LED modules, but it is obviously possible to resort to any other similar light source.

The lighting system 40 also consists of a second diffuser 43, integral with the fixed section 31 of the optical assembly 30, substantially conical in shape and extending downwards. In accordance with the embodiment disclosed, it has an inner surface 45 also substantially conical in shape with an axis coinciding with the optical axis X and a cross section increasing in the direction of moving away from a portion connecting to the fixed section 31. In particular, it has an internal surface 45 with an inclination such that it generates an angle θ with respect to the optical axis X that is less than the angle α. In this way, said second diffuser 43 in fact generates a cavity 44 inside which the movable section 32 of the optical assembly, the ring light 41 and the first diffuser 42 are located.

An arrangement of the elements constituting a lighting system of this type is crucial for generating a section for lighting the specimen that is homogeneous and of appropriate amplitude and intensity. Notably, in fact, the second diffuser 43 extends in the direction of the optical axis X for a length sufficient to contain the end of the movable section 32, the ring light 41 and the first diffuser 42 within the relative internal cavity and in all the positions that these assume as a result of the zoom movement of the movable section 32. Therefore, since the first diffuser 42 is at all times located inside the cavity 44 generated by the second diffuser 43 and immediately below the ring light 41, it imposes a predefined inclination on the light beam emitted by the ring itself. More precisely, according to a characteristic aspect of the present invention, the arrangement of said first diffuser 42 immediately below the ring light 41, so that it is interposed between the subject to be analysed and the light source, ensures that the light beam is not sent directly to the subject being analysed, but rather is first of all reflected and inclined.

It is clear, in this regard, that the inclination of the light beam and the geometry of the corresponding light section is dictated by the reciprocal position of said two diffusers. In particular, according to a characteristic aspect of the present invention, the outer surface 46 of the first diffuser 42 and inner surface 45 of the second diffuser 43 are reflective opaque surfaces, in other words, non-specular white surfaces suitable for diffusively reflecting the incident light. In this way, the radiation emitted by the light ring is reflected by the first diffuser on the internal walls of the second diffuser 43, which therefore conveys a diffused light towards the specimen C.

In addition to the above, it should be noted that the first diffuser 42, contrary to the external diffuser 43 that is integral with the fixed section of the optical assembly 30, is integral with the movable section 32 of the optical group 30, and is therefore moveable along the optical axis X. Hence the ring light 41 and the first diffuser move integrally with the external lens of the movable section 32 so that, when approaching or moving away from the end of the movable section 32 to the specimen C, the mode of light diffusion towards the specimen C is at all times optimal.

Furthermore, according to the embodiment disclosed, the lighting system 40 is connected to the control unit (known in the art and therefore not disclosed herein) for regulating the intensity emitted by the ring light 41.

Moreover, the device according to the invention uses a specially developed software that controls data acquisition and storage.

Additionally, according to an advantageous aspect of the present invention, the camera body 20 includes an image sensor moving in the direction of the optical axis X which allows for a significant increase in optical dynamics.

Advantageously, the device according to the invention makes use of a zoom optic which has been enhanced compared to what is currently used in the macrophotography sector and which, by virtue of the association with the above-mentioned light guidance and redirection system, offers a significantly improved performance compared to what is commercially available.

Furthermore, in accordance with an advantageous aspect of the present invention, by providing the device with a suitable enhanced lighting system it is possible to analyse subjects placed at a distance of up to three meters from the optical assembly.

According to a further aspect of the invention, the base is equipped with wheels in order to facilitate transfer of the device. However, a wall or ceiling support structure may also be adopted.

In accordance with what has been disclosed thus far, it is evident that the device according to the invention combines high resolution information given by the quality of the optics and the lighting system with a simplicity of structure that makes its use possible even by unskilled personnel. In addition, its simple construction means easy maintenance and significant cost savings.

In the foregoing, reference has been made to preferred embodiments, but it should be noted that anyone skilled in the art may make various modifications to the constituent elements, e.g. with regard to the materials used or the type of light source, without thereby departing from the relevant scope of protection, as clarified by the following appended claims.

## Claims

1. An optical device (10) for use in the field of extreme macrophotography comprising:
- a zoom optical assembly (30) comprising a fixed section (31) and a section that is movable (32) in the direction of the optical axis (X) relative to the fixed section;
- a lighting system (40) comprising a ring light (41) stably associable with the end of said movable section (32),
said optical device (10) being **characterised in that** it comprises:
- a first diffuser (42) integral with said movable section (32) arranged so as to be interposed between said ring light (41) and the subject to be photographed, so that the light beam emitted by said ring light (41) is not sent directly to the subject to be photographed,
- a second diffuser (43) integral with said fixed section. Said second diffuser (43) being substantially conical in shape and being arranged in such a way that said ring light (41) and first diffuser (42) are housed within a cavity (44) generated by the second diffuser (43).

2. The optical device according to claim 1, **characterised in that** said first diffuser (42) associated with said movable section (32) comprises a reflective opaque conical outer surface (46) with an axis coinciding with the optical axis (X) and a cross section increasing in the direction of moving away from a portion connecting to the movable section (32) so as to form an angle (α) with the optical axis (X) of less than 90°.

3. The optical device according to the previous claim, **characterised in that** said reflective opaque conical outer surface (46) has a minimum diameter equal to or less than the inner diameter of said ring light (41) and a maximum diameter equal to or greater than the outer diameter of said ring light (41).

4. The optical device according to claim 1, **characterised in that** said second diffuser (43) has an inner surface (45) substantially conical in shape with an axis coinciding with the optical axis (X) and a cross section increasing in the direction of moving away from a portion connecting to the fixed section (31) with said inner surface (45) having an inclination such as to generate an angle (θ) with respect to the optical axis (X) that is lower than said angle (α).

5. The optical device according to any one of the preceding claims, **characterised in that** said outer surface (46) of said first diffuser (42) and said inner surface (45) of said second diffuser (43) are reflective opaque.

6. The device according to claim 1, **characterised in that** said second diffuser (43) extends in the direction of the optical axis (X) for a length sufficient to contain within the corresponding internal cavity (44) the end of said movable section (32) and said ring light (41) and first diffuser (41) in all the positions assumed by these following the zoom movement of said movable section (32).

7. The optical device according to claim 1, **characterised in that** said ring light (41) comprises LED modules.

8. The device according to claim 1, **characterised in that** it comprises a camera body (20) to which is associated said fixed section (31), said camera body (20) being provided with an image sensor movable along the optical axis (X).

## Patentansprüche

1. Optische Vorrichtung (10) zur Verwendung auf dem Gebiet der extremen Makrofotografie, umfassend:
- eine optische Zoomeinheit (30), die einen festen Abschnitt (31) und einen in Richtung der optischen Achse (X) relativ zum festen Abschnitt beweglichen Abschnitt (32) umfasst;
- ein Beleuchtungssystem (40), das ein Ringlicht (41) umfasst, das stabil mit dem Ende des beweglichen Abschnitts (32) verbunden werden kann,
wobei die optische Vorrichtung (10) **dadurch gekennzeichnet ist, dass** sie umfasst:
- einen ersten Diffusor (42), der fest mit dem beweglichen Teil (32) verbunden ist und so angeordnet ist, dass er zwischen dem Ringlicht (41) und dem zu fotografierenden Objekt angeordnet ist, so dass der von dem Ringlicht (41) ausgesandte Lichtstrahl nicht direkt auf das zu fotografierende Objekt gerichtet ist,
- einen zweiten Diffusor (43), der fest mit dem festen Teil verbunden ist. Der zweite Diffusor (43) hat eine im Wesentlichen konische Form und ist so angeordnet, dass das Ringlicht (41) und der erste Diffusor (42) in einem vom zweiten Diffusor (43) gebildeten Hohlraum (44) untergebracht sind.

2. Optische Vorrichtung nach Anspruch 1, **dadurch gekennzeichnet, dass** der erste Diffusor (42), der mit dem beweglichen Abschnitt (32) verbunden ist, eine reflektierende undurchsichtige konische Außenfläche (46) mit einer Achse, die mit der optischen Achse (X) zusammenfällt, und einem Querschnitt aufweist, der sich in der Richtung, in der er sich von einem Teil, der mit dem beweglichen Abschnitt (32) verbunden ist, wegbewegt, vergrößert, um einen Winkel (a) mit der optischen Achse (X) von weniger als 90° zu bilden.

3. Optische Vorrichtung nach dem vorhergehenden Anspruch, **dadurch gekennzeichnet, dass** die reflektierende undurchsichtige konische Außenfläche (46) einen minimalen Durchmesser hat, der gleich oder kleiner ist als der Innendurchmesser des Ringlichts (41), und einen maximalen Durchmesser, der gleich oder größer ist als der Außendurchmesser des Ringlichts (41).

4. Optische Vorrichtung nach Anspruch 1, **dadurch gekennzeichnet, dass** der zweite Diffusor (43) eine im Wesentlichen konische Innenfläche (45) mit einer Achse, die mit der optischen Achse (X) zusammenfällt, und einem Querschnitt aufweist, der sich in Richtung der Entfernung von einem Teil, der mit dem festen Abschnitt (31) verbunden ist, vergrößert, wobei die Innenfläche (45) eine solche Neigung aufweist, dass ein Winkel (6) in Bezug auf die optische Achse (X) erzeugt wird, der kleiner als der Winkel (a) ist.

5. Optische Vorrichtung nach einem der vorhergehenden Ansprüche, **dadurch gekennzeichnet, dass** die Außenfläche (46) des ersten Diffusors (42) und die Innenfläche (45) des zweiten Diffusors (43) reflektierend undurchsichtig sind.

6. Vorrichtung nach Anspruch 1, **dadurch gekennzeichnet, dass** sich der zweite Diffusor (43) in Richtung der optischen Achse (X) über eine Länge erstreckt, die ausreicht, um in dem entsprechenden inneren Hohlraum (44) das Ende des beweglichen Abschnitts (32) sowie das Ringlicht (41) und den ersten Diffusor (41) in allen von diesen nach der Zoom-Bewegung des beweglichen Abschnitts (32) eingenommenen Positionen zu enthalten.

7. Optische Vorrichtung nach Anspruch 1, **dadurch gekennzeichnet, dass** das Ringlicht (41) LED-Module umfasst.

8. Vorrichtung nach Anspruch 1, **dadurch gekennzeichnet, dass** sie einen Kamerakörper (20) umfasst, dem der feste Abschnitt (31) zugeordnet ist, wobei der Kamerakörper (20) mit einem entlang der optischen Achse (X) beweglichen Bildsensor versehen ist.

## Revendications

1. Dispositif optique (10) destiné à être utilisé dans le domaine de la macrophotographie extrême, comprenant:
- un ensemble optique de zoom (30) comprenant une section fixe (31) et une section mobile (32) dans la direction de l'axe optique (X) par rapport à la section fixe;
- un système d'éclairage (40) comprenant une lumière annulaire (41) associée de manière stable à l'extrémité de ladite section mobile (32),
ledit dispositif optique (10) étant **caractérisé en ce qu'**il comprend:
- un premier diffuseur (42) solidaire de ladite section mobile (32) disposé de manière à être interposé entre ladite lumière annulaire (41) et le sujet à photographier, de sorte que le faisceau lumineux émis par ladite lumière annulaire (41) ne soit pas envoyé directement sur le sujet à photographier,
- un deuxième diffuseur (43) solidaire de ladite section fixe. Ce deuxième diffuseur (43) étant de forme sensiblement conique et étant disposé de telle sorte que la lumière annulaire (41) et le premier diffuseur (42) sont logés dans une cavité (44) générée par le deuxième diffuseur (43).

2. Dispositif optique selon la revendication 1, **caractérisé en ce que** ledit premier diffuseur (42) associé à ladite section mobile (32) comprend une surface extérieure conique opaque réfléchissante (46) dont l'axe coïncide avec l'axe optique (X) et dont la section transversale augmente dans le sens de l'éloignement à partir d'une portion reliée à la section mobile (32) de manière à former un angle (a) avec l'axe optique (X) inférieur à 90°.

3. Dispositif optique selon la revendication précédente, **caractérisé en ce que** ladite surface extérieure conique opaque réfléchissante (46) a un diamètre minimal égal ou inférieur au diamètre intérieur de ladite lumière annulaire (41) et un diamètre maximal égal ou supérieur au diamètre extérieur de ladite lumière annulaire (41).

4. Dispositif optique selon la revendication 1, **caractérisé en ce que** ledit deuxième diffuseur (43) présente une surface intérieure (45) de forme sensiblement conique dont l'axe coïncide avec l'axe optique (X) et dont la section transversale augmente dans le sens de l'éloignement à partir d'une portion reliée à la section fixe (31), ladite surface intérieure (45) présentant une inclinaison telle qu'elle génère un angle (6) par rapport à l'axe optique (X) qui est inférieur audit angle (a).

5. Dispositif optique selon l'une quelconque des revendications précédentes, **caractérisé en ce que** ladite surface extérieure (46) dudit premier diffuseur (42) et ladite surface intérieure (45) dudit deuxième diffuseur (43) sont opaques réfléchissantes.

6. Le dispositif selon la revendication 1, **caractérisé en ce que** ledit deuxième diffuseur (43) s'étend en direction de l'axe optique (X) sur une longueur suffisante pour contenir dans la cavité interne correspondante (44) l'extrémité de ladite section mobile (32) et lesdits annulaire (41) et premier diffuseur (41) dans toutes les positions prises par ceux-ci suite au mouvement de zoom de ladite section mobile (32).

7. Le dispositif optique selon la revendication 1, **caractérisé en ce que** ladite lumière annulaire (41) comprend des modules LED.

8. Le dispositif selon la revendication 1, **caractérisé en ce qu'**il comprend un corps de caméra (20) auquel est associée ladite section fixe (31), ledit corps de caméra (20) étant pourvu d'un capteur d'image mobile le long de l'axe optique (X).
